# FASCICULE DE BREVET EUROPEEN

(11) **EP 0 459 902 B1**
(45) Date de publication et mention de la délivrance du brevet: **10.01.1996**
(21) Numéro de dépôt: 91401402.2
(22) Date de dépôt: 30.05.1991
(51) Int. Cl.: H02P 3/12

(54) **Circuit de commande pour actionneur électromécanique et actionneur électromécanique utilisant un tel circuit**
Schaltkreis für elektromechanische Betätigungsvorrichtung und Betätigungsvorrichtung unter Verwendung dieses Schaltkreises
Control circuit for electro-mechanical actuator and electro-mechanical actuator utilizing this circuit

(30) Priorité: 31.05.1990 FR 9006762
(43) Date de publication de la demande: 04.12.1991
(73) Titulaire: VALEO NEIMAN, F-78290 CROISSY-SUR-SEINE (FR)
(72) Inventeur: Peret, Hervé, 1bis, rue du Printemps, F-78230 Le Pecq (FR)
(74) Mandataire: Gamonal, Didier

(56) Documents cités:
- EP-A- 0 032 980
- DE-A- 2 726 810

## Description

La présente invention concerne un circuit de commande pour les actionneurs électromécaniques.

Elle concerne aussi un actionneur électromécanique utilisant un tel circuit de commande.

L'invention trouve application en particulier dans le domaine des actionneurs électromécaniques pour l'industrie automobile, notamment dans les dispositifs de verrouillage/déverrouillage centralisés des portières et du hayon arrière d'un véhicule ou encore dans les dispositifs de réglage de la direction des phares du véhicule.

Dans l'art antérieur on a déjà proposé des dispositifs de commande permettant de protéger le moteur électrique d'un actionneur électromécanique.

Dans les actionneurs de ce genre, un moteur électrique à courant continu tourne toujours dans le même sens.

Il embraye un dispositif destiné à transformer le mouvement de rotation uniforme ou de sens uniforme en un mouvement de va-et-vient. Ce mouvement est exploité en particulier quand on souhaite ouvrir ou fermer, verrouiller ou déverrouiller un dispositif comme une serrure de véhicule.

Dans les réalisations de l'art antérieur, on a constaté que les actionneurs, quand ils sont mis en parallèle sur la même alimentation électrique, peuvent ne pas s'arrêter tous au même instant, notamment à cause des résistances mécaniques qui peuvent varier d'un actionneur àl'autre, en sorte que, celui ou ceux qui continuent à tourner jouent vis-à-vis de celui qui est arrêté antérieurement le rôle de générateur électrique et donnent ainsi à ce moteur arrêté une impulsion d'alimentation qui le fait tourner à nouveau.

D'autre part, à la commande d'arrêt par interruption de la ligne d'alimentation, le moteur électrique entraîné par sa propre inertie peut continuer à tourner et devenir générateur.

De ce fait son mouvement continue pendant un certain temps.

On a déjà prévu des dispositifs comportant une butée latérale permettant de bloquer la rotation du moteur dans certaines positions angulaires.

Mais de tels systèmes ne permettent pas toujours un arrêt supportable du moteur d'une part, et, d'autre part sont des moyens supplémentaires qui augmentent la complexité de réalisation des actionneurs.

De par le document EP 032 980, il est connu de provoquer le court-circuit de l'induit du moteur par l'intermédiaire d'un transistor utilisé comme interrupteur, dont la fermeture est provoquée la polarisation adéquate de sa jonction émetteur-base, cette polarisation induisant la polarisation inverse de la jonction d'une diode connectée en parallèle et en inverse sur la jonction émetteur-base du transistor.

Dans un tel dispositif, la polarisation du transistor qui a pour effet de le rendre passant provoque une inversion de la polarisation de la diode. En effet celle-ci est polarisée en direct en mode moteur et est polarisée en inverse en mode générateur.

Ce dispositif présente l'inconvénient de provoquer une inversion de la polarisation de la diode, sa polarisation étant directe en fonctionnement normal, et devenant inverse lorsqu'on coupe l'alimentation du moteur.

En effet la présente invention concerne un circuit de commande pour actionneur électromécanique, du type à moteur électrique à courant continu, ledit moteur étant alimenté en fonctionnement par une source de tension de polarité à signe constant, le circuit de commande étant destiné à permettre l'arrêt rapide du moteur.

Le circuit de commande comporte un moyen destiné à provoquer l'arrêt du moteur par court-circuit d'induit, le moyen destiné à provoquer l'arrêt du moteur comporte un interrupteur comprenant un transistor de commutation, dont la base est polarisée par l'intermédiaire d'une résistance et dont la fermeture est commandée par l'apparition d'un courant d'induit, le moteur fonctionnant en génératrice.

L'invention se caractérise en ce que l'anode d'une première diode est connectée à la base du transistor de commutation, sa cathode étant connectée à la cathode d'une seconde diode dont l'anode est connectée à l'émetteur du transistor de commutation, le point commun auxquel sont reliées les cathodes de ces deux diodes étant de plus relié à la borne d'alimentation négative de ladite source de tension.

De plus, la disposition des diodes leur permet de plus de jouer en mode générateur un rôle de protection du circuit contre les courants de retour pouvant provenir des autres actionneurs (ce sont des diodes anti-retour).

L'invention concerne aussi un actionneur électromécanique caractérisé en ce qu'il comporte un circuit de commande tel que décrit ci dessus.

D'autres caractéristiques et avantages de la présente invention seront mieux compris à l'aide de la description et des dessins annexés qui sont :
- la figure 1 un schéma électrique représentant une suite d'actionneurs électromécaniques selon l'art antérieur ;
- la figure 2 est le schéma d'un actionneur électromécanique selon l'invention.

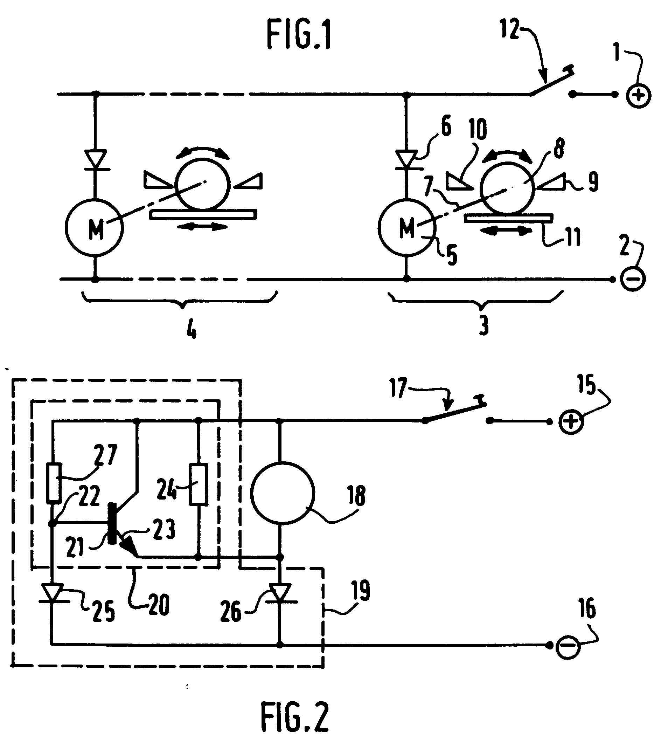

A la figure 1, on a représenté un système de plusieurs actionneurs électromécaniques selon l'art antérieur.

Les divers actionneurs 3,4 sont connectés par l'intermédiaire d'un interrupteur 12 à la borne + 1 et la borne - 2 d'une source d'alimentation comme la batterie du véhicule.

La fermeture de l'interrupteur 12 provoque la mise en action simultanée de la série d'actionneurs 3,4.

On a détaillé les composants principaux de l'actionneur 3.

L'actionneur comporte principalement un moteur électrique à courant continu 5 qui tourne toujours dans le même sens de rotation. De ce fait le composant est un composant simple et peu coûteux.

Le moteur 5 comporte un arbre 7 lié mécaniquement à un dispositif de conversion 8,11 du mouvement de rotation uniforme en un mouvement de translation en va-et-vient. Un tel dispositif peut comporter par exemple un chariot monté sur une vis sans fin 11 actionnée par un train d'engrenages 8.

L'actionneur de l'art antérieur comporte des moyens 9 et 10 pour limiter le débattement de l'organe tournant 8.

Pour protéger les différents moteurs, des courants de retour engendrés par la mise en fonctionnement en génératrice du moteur 5, on dispose dans le circuit d'alimentation de chaque moteur une diode 6 anti-retour.

De ce fait si un moteur électrique continue à tourner sous l'effet de son inertie, même s'il se transforme en générateur de courant, les autres moteurs ne peuvent redémarrer grâce aux divers diodes anti-retour disposées dans le circuit de chacun d'entre eux.

Cependant on constate que l'arrêt d'un tel moteur peut prendre jusqu'à 120 millisecondes et engendrer des fonctionnements erratiques du système.

Afin de porter remède à cet état de la technique, la présente invention propose un circuit de commande 19 représenté à la figure 2.

A la figure 2 on a représenté un seul actionneur, étant entendu qu'une série d'actionneurs peut être connectée sur un circuit d'alimentation constitué par l'interrupteur 17 et les bornes 15 positive et 16 négative de la source de courant continu.

Le moteur électrique 18 de l'actionneur représenté à la figure 2 est connecté, d'une part, à une borne de l'interrupteur 17, et, d'autre part, en retour à la borne 16 d'alimentation négative.

Entre ces deux bornes, on dispose un moyen 19 destiné à provoquer l'arrêt du moteur par court-circuit de l'induit dès que l'interrupteur 17 est ouvert.

De ce fait, le court-circuit de l'induit du moteur 18 dissipe la plus grande partie de l'énergie électrique ré-émise par le moteur fonctionnant en génératrice de façon à éviter les redémarrages intempestifs d'une part, et, d'autre part de freiner bien plus rapidement le mouvement d'inertie du moteur.

A cet effet, on dispose d'un interrupteur 20 commandé par l'apparition d'un courant généré par l'induit en sens inverse du sens du courant normal en fonctionnement moteur.

Quand le dispositif d'interruption 20 détecte l'apparition d'un courant d'induit, cet interrupteur est fermé et dissipe l'énergie électrique très rapidement.

D'autre part, pour protéger le moteur et l'interrupteur des courants de retour, on a disposé une diode 25 de façon à éviter l'influence des courants provenant des autres actionneurs.

Dans un mode de réalisation particulier, l'interrupteur 20 est constitué par un transistor 21 de commutation, dont la base est polarisée par l'intermédiaire d'une résistance 27 connectée au point commun du moteur 18 et l'interrupteur 17.

Le courant débité par l'induit du moteur 18, quand l'interrupteur 17 est ouvert permet de déclencher la fermeture du transistor 21.

La base du transistor 21 est connectée d'autre part à l'anode d'une diode de polarisation 25 connectée elle-même avec la borne négative 16 d'alimentation en courant. Cette diode permet de faciliter le blocage du transistor 21 au cours du fonctionnement en mode moteur.

L'émetteur 23 du transistor 21 est connecté d'autre part à l'anode d'une seconde diode anti-retour 26 dont la cathode est elle-même connectée au point commun avec la cathode de la diode 25.

De façon à protéger l'actionneur au cours du fonctionnement en mode moteur, on dispose une résistance 24 entre l'émetteur 23 et le collecteur du transistor 21.

De ce fait la résistance 24 est montée en parallèle avec l'induit du moteur 18.

En choisissant convenablement la valeur des résistances 24 et 27, on obtient un fonctionnement amélioré de l'actionneur de la figure 2.

## Revendications

1. Circuit de commande pour actionneur électromécanique à moteur électrique à courant continu, alimenté en fonctionnement par une source de tension de polarité à signe constant, ledit circuit de commande comportant un moyen (19) destiné à provoquer l'arrêt du moteur (18) par court-circuit d'induit, ledit moyen (19) destiné à provoquer l'arrêt du moteur (18) comportant un interrupteur (20) comprenant un transistor de commutation (21) dont la base est polarisée par l'intermédiaire d'une résistance (27) et, dont la fermeture est commandée par l'apparition d'un courant d'induit, le moteur fonctionnant en génératrice,
caractérisé en ce que
l'anode d'une première diode (25) est connectée à la base du transistor de commutation (21), sa cathode étant connectée à la cathode d'une seconde diode (26) dont l'anode est connectée à l'émetteur du transistor de commutation (21), le point commun auxquel sont reliées les cathodes de ces deux diodes (25,26) étant de plus relié à la borne d'alimentation négative de ladite source de tension.

2. Actionneur du type comportant un moteur électrique tournant dans un seul sens de rotation, caractérisé en ce qu'il comporte un circuit de commande selon la revendication 1.

## Patentansprüche

1. Schaltkreis für elektromechanische Betätigungsvorrichtung mit Gleichstromelektromotor, der im Betrieb durch eine mit konstantem Vorzeichen gepolte Spannungsquelle gespeist wird, wobei der besagte Schaltkreis ein Mittel (19) zur Herbeiführung der Abschaltung des Motors (18) durch Ankerkurzschluß enthält und wobei das besagte Mittel (19) zur Herbeiführung der Abschaltung des Motors (18) einen Schalter (20) umfaßt, der einen Schalttransistor (21) enthält, dessen Basis über einen Widerstand (27) vorgespannt ist und dessen Schließung durch das Auftreten eines Ankerstroms gesteuert wird, während der Motor im Generatorbetrieb läuft , **dadurch** **gekennzeichnet,** daß die Anode einer ersten Diode (25) an die Basis des Schalttransistors (21) angeschlossen ist, während ihre Kathode an die Kathode einer zweiten Diode (26) angeschlossen ist, deren Anode an den Emitter des Schalttransistors (21) angeschlossen ist, wobei der gemeinsame Anschluß, mit dem die Kathoden dieser beiden Dioden (25, 26) verbunden sind, außerdem mit der negativen Anschlußklemme der besagten Spannungsquelle verbunden ist.

2. Betätigungsvorrichtung in der Ausführung mit einem nur in einer Drehrichtung laufenden Elektromotor, **dadurch gekennzeichnet**, daß er einen Schaltkreis nach Anspruch 1 umfaßt.

## Claims

1. A control circuit for an electro-mechanical actuator having a direct current electric motor which, in operation, is supplied with power by a voltage source having a polarity of constant sign, the said control circuit including a means (19) adapted to cause the motor (18) to stop by short-circuiting its armature, the said means (19) for causing the motor to stop including an interruptor (20) which comprises a switching transistor (21), the base of which is polarised by means of a resistor (27), and the closing of which is triggered by the appearance of an armature current with the motor operating in a generating mode, characterised in that the anode of a first diode (25) is connected to the base of the switching transistor (21), its cathode being connected to the cathode of a second diode (26), the anode of which is connected to the emitter of the switching transistor (21), the common point to which the cathodes of the said two diodes (25, 26) are connected being further connected to the negative supply terminal of the said voltage source.

2. An actuator of the type comprising an electric motor rotating in only one direction of rotation, characterised in that it includes a control circuit according to Claim 1.
